# EUROPEAN PATENT APPLICATION

(11) **EP 4 718 590 A1**
(43) Date of publication of application: **01.04.2026**
(21) Application number: 25189705.4
(22) Date of filing: 15.07.2025
(51) Int. Cl.: H01M 50/00, C09J 7/30

(54) **BATTERY ATTACHMENT TAPE AND BATTERY ATTACHED WITH THE SAME**

(30) Priority: 30.09.2024 KR 20240132811
(71) Applicant: SAMSUNG SDI CO., LTD., Yongin-si, Gyeonggi-do 17084 (KR)
(72) Inventor: LIM, Sungil, 17084 Yongin-si (KR)
(74) Representative: Marks & Clerk LLP

(57) **Abstract**

A battery attachment tape includes: an adhesive portion including an adhesive surface attached to a surface of a battery cell; and a gripping portion extending from one side of the adhesive portion. The adhesive portion includes: a first adhesive portion overlapping with the gripping portion in a first direction; and a second adhesive portion on opposite sides of the first adhesive portion. Adhesive strengths of the first adhesive portion and the second adhesive portion are different from each other.

## Description

### BACKGROUND

### 1. Field

Aspects of embodiments of the present disclosure relate to a battery attachment tape having a structure in which the ease of a battery disassembly may be improved, and a battery attached with the battery attachment tape.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

In a battery, a battery detachment may be performed as needed or desired, and thus, a pull tab tape may be adhered to a battery cell for the convenience of a user during a battery separation process. In this case, if an adhesive strength of the tape is low, a lifting and a noise between the tape and the battery cell may occur. On the other hand, if the adhesive strength is high, the ease of a battery disassembly process may be reduced. Therefore, it may be desirable to improve or optimize the adhesive section structure of the tape according to one or more of the above.

Embodiments of the present disclosure may be directed to a battery attachment tape that may prevent or substantially prevent the battery attachment tape from being lifted off from the battery cell in situations such as when an electronic device is dropped, while also improving the ease of a battery disassembly process, and a battery attached with the battery attachment tape.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a battery attachment tape includes: an adhesive portion including an adhesive surface attached to a surface of a battery cell; and a gripping portion extending from one side of the adhesive portion. The adhesive portion includes: a first adhesive portion overlapping with the gripping portion in a first direction; and a second adhesive portion on opposite sides of the first adhesive portion. Adhesive strengths of the first adhesive portion and the second adhesive portion are different from each other.

In an embodiment, the first adhesive portion may extend to another side opposite to the one side of the adhesive portion.

In an embodiment, the adhesive strength of the second adhesive portion may be greater than the adhesive strength of the first adhesive portion.

In an embodiment, each of the first adhesive portion and the second adhesive portion may include a plurality of dots including an adhesive material, and the dots of the second adhesive portion may have a dot diameter larger than those of the dots of the first adhesive portion.

In an embodiment, the dot diameter of a first dot from among the dots of the first adhesive portion may be 1.2 mm, and the dot diameter of a second dot from among the dots of the second adhesive portion may be 1.5 mm.

In an embodiment, each of the first adhesive portion and the second adhesive portion may include a plurality of dots including an adhesive material, and adjacent dots from among the plurality of dots may be located with their centers spaced equally apart from each other.

In an embodiment, a width of the first adhesive portion in the first direction may be greater than or equal to a width of the gripping portion in the first direction.

In an embodiment, a total area of the second adhesive portion may be smaller than a total area of the first adhesive portion.

In an embodiment, the battery attachment tape may further include a non-adhesive portion having a non-adhesive area on at least one of edges at a border area of the adhesive portion.

In an embodiment, the non-adhesive portion may be adjacent to the second adhesive portion.

In an embodiment, the battery attachment tape may further include: a strong adhesive portion on another side opposite to the one side of the adhesive portion, and the strong adhesive portion may include a plurality of line-shaped non-adhesive portions.

According to one or more embodiments of the present disclosure, a battery attached with a battery attachment tape is provided, the battery attachment tape including: an adhesive portion including an adhesive surface attached to a surface of a battery cell; and a gripping portion extending from one side of the adhesive portion. The adhesive portion includes: a first adhesive portion overlapping with the gripping portion in a first direction; and a second adhesive portion on opposite sides of the first adhesive portion. Adhesive strengths of the first adhesive portion and the second adhesive portion are different from each other.

In an embodiment, the first adhesive portion may extend to another side opposite to the one side of the adhesive portion.

In an embodiment, the adhesive strength of the second adhesive portion may be greater than the adhesive strength of the first adhesive portion.

In an embodiment, each of the first adhesive portion and the second adhesive portion may include a plurality of dots including an adhesive material, and the dots of the second adhesive portion may have a dot diameter larger than those of the dots of the first adhesive portion.

In an embodiment, the dot diameter of a first dot from among the dots of the first adhesive portion may be 1.2 mm, and the dot diameter of a second dot from among the dots of the second adhesive portion may be 1.5 mm.

In an embodiment, each of the first adhesive portion and the second adhesive portion may include a plurality of dot-shaped adhesive materials, and adjacent adhesive materials from among the dot-shaped adhesive materials may be located with their centers spaced equally apart from each other.

In an embodiment, a width of the first adhesive portion in the first direction may be greater than or equal to a width of the gripping portion in the first direction.

In an embodiment, the battery attachment tape may further include a non-adhesive portion having a non-adhesive area on at least one or more edges at a border area of the adhesive portion.

In an embodiment, the non-adhesive portion may be adjacent to the second adhesive portion.

At least some of the above and other features of the invention are set out in the claims.

According to some embodiments of the present disclosure, the adhesive portion of a battery attachment tape may include regions with different adhesive strengths from each other in a direction in which the tape may be peeled off through a gripping portion, thereby improving the ease of a separation of the adhesive portion and the battery cell from each other. In addition, the adhesive portion of the battery attachment tape may include a first adhesive portion having a relatively weaker adhesive strength on the same line as the direction in which the gripping portion may be peeled off, and a second adhesive portion having a relatively stronger adhesive strength may be provided on both sides (e.g., opposite sides) thereof, thereby improving the ease of the separation of the battery cell, and minimizing or reducing a lifting phenomenon of the tape.

According to some embodiments of the present disclosure, the battery attachment tape may include a non-adhesive region, thereby preventing or substantially preventing a lifting between the battery cell and the adhesive portion due to a vibration, a dropping, and/or the like. In addition, the lifting and the noise that may be caused by the lifting may be further reduced due to the second adhesive portion having the relatively stronger adhesive strength around the non-adhesive region.

According to some embodiments of the present disclosure, in response to a weakening of the bond between the battery cell and the adhesive portion due to the non-adhesive region, the battery attachment tape may supplement the bonding strength between the adhesive portion and the battery cell by arranging a second adhesive portion having a relatively stronger adhesive strength adjacent to the non-adhesive region. In other words, the adhesive portion and the battery cell may be more firmly bonded to each other by the second adhesive portion.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an exploded perspective view of a battery including a battery attachment tape according to some embodiments of the present disclosure.
FIG. 2 illustrates a top plan view of a configuration of a battery attachment tape in more detail according to some embodiments of the present disclosure.
FIG. 3 illustrates an enlarged planar view of a first dot provided in a first adhesive portion and a second dot provided in a second adhesive portion according to some embodiments of the present disclosure.
FIG. 4 illustrates an enlarged planar view of an interval between first dots provided in a first adhesive portion and an interval between second dots provided in a second adhesive portion according to some embodiments of the present disclosure.
FIG. 5 illustrates an enlarged planar view of an interval between first dots provided in a first adhesive portion and a surface-to-surface interval between second dots provided in a second adhesive portion according to some embodiments of the present disclosure.
FIG. 6 illustrates a top plan view of a ratio of a gripping portion, a first adhesive portion, and a second adhesive portion of a battery attachment tape according to some embodiments of the present disclosure.
FIG. 7 illustrates a top plan view of a ratio of a gripping portion, a first adhesive portion, and a second adhesive portion of a battery attachment tape according to some embodiments of the present disclosure.
FIG. 8 illustrates a perspective view of a state in which a battery attachment tape is attached to a battery cell according to some embodiments of the present disclosure.
FIG. 9 illustrates a perspective view of a state in which a battery attachment tape is being peeled off from a battery cell according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

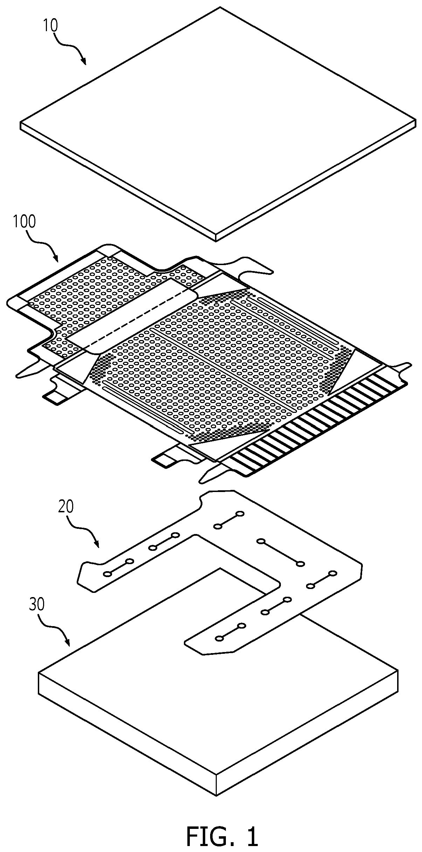

FIG. 1 illustrates an exploded perspective view of a battery including a battery attachment tape 100 according to some embodiments of the present disclosure.

Referring to FIG. 1, a battery according to some embodiments of the present disclosure may include a battery cell 10, the battery attachment tape 100, a fixing tape 20, and a battery fixing portion 30. The battery includes at least the battery cell 10 and the battery attachment tape 100, which may be generally stacked as illustrated in FIG. 1. The battery attachment tape 100 may be directly connected to (e.g., directly coupled to or attached to) the battery cell 10. For example, one surface of the battery attachment tape 100 may be adhered to one surface of the battery cell 10, one surface of the fixing tape 20 may be attached to another surface (e.g., an opposite surface) of the battery attachment tape 100, and one surface of the battery fixing portion 30 may be attached to another surface (e.g., an opposite surface) of the fixing tape 20. The battery fixing portion 30 may be a structure disposed inside or outside a case, such as that of an electronic device or a housing.

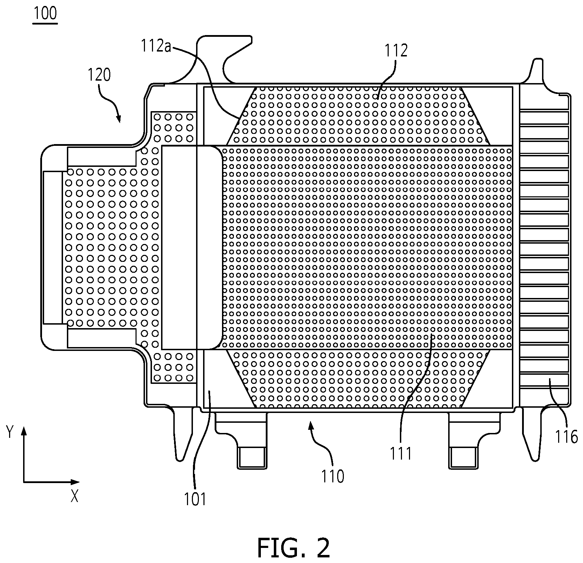

The battery attachment tape 100 has an adhesive portion 110 (e.g., see FIG. 2) formed on one surface facing the battery cell 10. For example, a film-type battery attachment tape 100 may have an adhesive strength on one side, and may have a surface without an adhesive strength on an opposite side. Therefore, the battery attachment tape 100 may be adhered depending on the adhesive strength of the fixing tape 20 when adhering to the fixing tape 20. In some embodiments, the fixing tape 20 may have a suitable adhesive strength (e.g., a predetermined adhesive strength) on both surfaces (e.g., on opposite surfaces), or in other words, on a surface facing the battery attachment tape 100 and on a surface facing the battery fixing portion 30.

FIG. 2 illustrates a top plan view of a configuration of a battery attachment tape 100 in more detail according to some embodiments of the present disclosure. Hereinafter, a first direction may refer to the X direction and a second direction may refer to the Y direction illustrated in FIG. 2.

Referring to FIG. 2, the battery attachment tape 100 includes an adhesive portion 110 including an adhesive surface adhered to a surface of the battery cell 10, and a gripping portion 120 extending from one side of the adhesive portion 110. The adhesive portion 110 includes a first adhesive portion 111 overlapping with the gripping portion 120 in the first direction (e.g., the X direction), and a second adhesive portion 112 disposed on both sides (e.g., opposite sides) of the first adhesive portion 111. The adhesive strengths of the first adhesive portion 111 and the second adhesive portion 112 are different from each other. The first adhesive portion 111 may be provided at a central region of the adhesive portion 110, and the second adhesive portion 112 may be disposed adjacent to the first adhesive portion 111. For example, the first adhesive portion 111 may extend from one side of the adhesive portion 110 to another side opposite to the one side of the adhesive portion 110. Among the first adhesive portion 111 and the second adhesive portion 112, the second adhesive portion 112 disposed on an edge region of the adhesive portion may be formed to have a stronger adhesive strength than that of the first adhesive portion 111.

In some embodiments, the first adhesive portion 111 may have a suitable adhesive strength that allows it to be more easily peeled off after being adhered to the battery cell 10, and the second adhesive portion 112 may maintain or substantially maintain the adhesive state with a stronger adhesive force, so that the battery attachment tape 100 may not be separated from the battery cell 10 due to an external force such as dropping or twisting.

For example, the first adhesive portion 111 and the second adhesive portion 112 may be formed in a direction parallel to or substantially parallel to the direction in which the gripping portion 120 disposed on one side of the adhesive portion 110 is peeled off. The parallel arrangement of the first adhesive portion 111 and the second adhesive portion 112 may enable easier peeling by a traction force generated from the gripping portion 120 in the first direction (e.g., the X direction).

In some embodiments, a non-adhesive portion 101 that does not have an adhesive strength may be formed in a portion of the total area of the adhesive portion 110 of the battery attachment tape 100. For example, as illustrated in FIG. 2, the adhesive portion 110 may include an adhesive area (e.g., the first adhesive portion 111 and the second adhesive portion 112) having an adhesive strength to be attached to at least a portion of one side of the battery cell 10, and a non-adhesive area (e.g., the non-adhesive area 101 including four areas formed at a border area) having no adhesive strength.

In some embodiments, at least one non-adhesive portion 101 may be formed along the edge of the adhesive portion 110. The non-adhesive portion 101 may be formed on at least one edge of a border area of the adhesive portion 110. In a case where the adhesive portion 110 has a quadrangular shape, the non-adhesive portion 101 may be formed at four corners of the quadrangular shape. In some embodiments, in a case where the adhesive portion 110 has a quadrangular shape, the non-adhesive portion 101 may be formed on at least two corners of the quadrangular shape. The second adhesive portion 112 has a stronger adhesive strength than that of the first adhesive portion 111, and may be formed to be adjacent to the non-adhesive portion 101, while not overlapping with the gripping portion 120 in the first direction (e.g., the X direction). Accordingly, the second adhesive portion 112 may compensate for a weakening of the adhesive strength of the battery attachment tape 100 due to the formation of the non-adhesive portion 101.

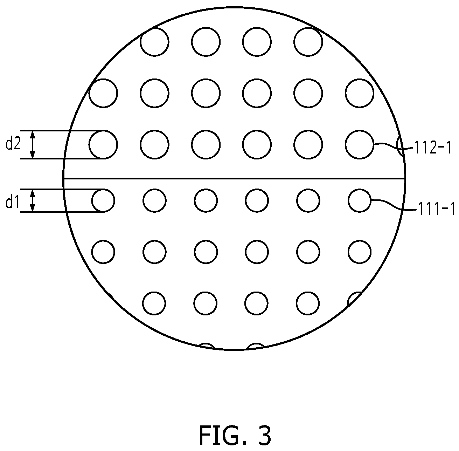

FIG. 3 illustrates an enlarged planar view of a first dot 111-1 provided in the first adhesive portion 111 and a second dot 112-1 provided in the second adhesive portion 112 according to some embodiments of the present disclosure.

Referring to FIG. 3, the adhesive material provided on the adhesive portion 110 may be provided in a plurality of dot shapes, and their sizes may be different from each other. For example, the first adhesive portion 111 and the second adhesive portion 112 may have different sizes of dots from each other included therein, and thus, may have different adhesive strengths per unit area.

For example, the dots provided in each of the first adhesive portion 111 and the second adhesive portion 112 may have different sizes from each other. In a case where the diameter of the first dot 111-1 located in the first adhesive portion 111 is defined as a first diameter d1 and the diameter of the second dot 112-1 located in the second adhesive portion 112 is defined as a second diameter d2, the second diameter d2 may be larger than the first diameter d1. The difference in dot sizes may cause a difference in the adhesive strength between the first adhesive portion 111 and the second adhesive portion 112.

As described above, because the diameter of the second dot 112-1 may be larger than the diameter of the first dot 111-1, the adhesive strength between the battery cell 10 and the second adhesive portion 112 may be stronger than the adhesive strength between the first adhesive portion 111 and the battery cell 10. On the other hand, because the diameter of the first dot 111-1 is smaller than the diameter of the second dot 112-1, the adhesive strength between the battery cell 10 and the first adhesive portion 111 may be weaker than the adhesive strength between the second adhesive portion 112 and the battery cell 10.

For example, the first diameter d1 may be 80% of the second diameter d2. In more detail, the first diameter d1 that is the diameter of the first dot 111-1 provided in the first adhesive portion 111 may be 1.2 mm, and the second diameter d2 that is the diameter of the second dot 112-1 provided in the second adhesive portion 112 may be 1.5 mm. However, the present disclosure is not limited thereto, and the diameters may be variously modified depending on requirements, such as the type of adhesive material, the density of dots, the area ratio between the first adhesive portion 111 and the second adhesive portion 112, and the number and width of non-adhesive portions 101.

The examples described above may be appropriate for a case in which a larger exposed area per unit area is formed in a case where a single adhesive material is used, resulting in a stronger adhesive strength. On the other hand, in a case where different adhesive materials having different adhesive strengths are used in the first adhesive portion 111 and the second adhesive portion 112, the exposed area and adhesive strength of the dot may have different correlations, but the present disclosure is not limited thereto.

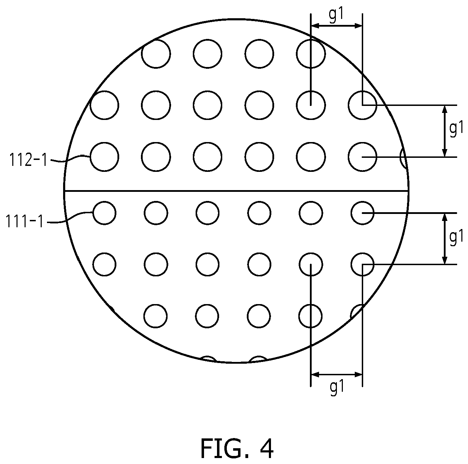

FIG. 4 illustrates an enlarged planar view of an interval between first dots 111-1 provided in the first adhesive portion 111 and an interval between second dots 112-1 provided in the second adhesive portion 112 according to some embodiments of the present disclosure.

Referring to FIG. 4, the adhesive material provided on the adhesive portion 110 may be provided in a plurality of dot shapes, and the intervals therebetween may be the same or substantially the same as each other. For example, the intervals between the centers of the dots provided in each of the first adhesive portion 111 and the second adhesive portion 112 may be the same or substantially the same as each other. As described above, the first dot 111-1 and the second dot 112-1 may have different diameters from each other, but the intervals between them may be the same or substantially the same as each other. As used herein, the same or substantially the same interval may mean that center-to-center separation distances g1 of adjacent dots in the X and Y directions are the same or substantially the same as each other.

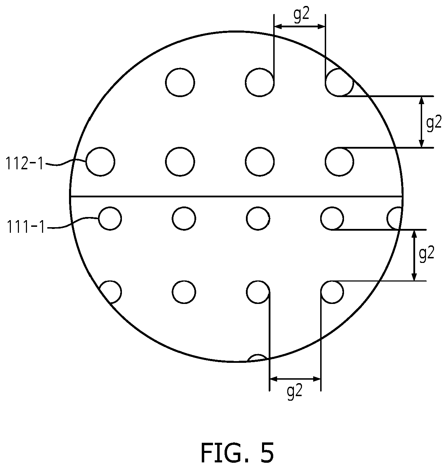

FIG. 5 illustrates an enlarged planar view of an interval between first dots 111-1 provided in the first adhesive portion 111 and a surface-to-surface interval between second dots 112-1 provided in the second adhesive portion 112 according to some embodiments of the present disclosure.

Referring to FIG. 5, surface-surface intervals g2 of dots adjacent to each other in the X and Y directions may be the same or substantially the same as each other. However, unlike that described above with reference to FIG. 4, the distance measurement criteria in FIG. 5 is the surface of the dots rather than the center. In the case described above with reference to FIG. 4, as the diameter of the dot increases in the same area, the adhesive area increases, so the adhesive strength may increase.

In some embodiments, in a case where the distance between surfaces is the same, the number of dots arranged in the same area may be reduced as the diameter of the dots increases. An adhesion may be lower than in a case where the center-to-center distance of the dots is the same.

The examples described above with reference to FIG. 4 and FIG. 5 may refer to cases where the same adhesive material, or in other words, an adhesive material having the same adhesive strength per unit area, is applied. In some embodiments, in a case where adhesive materials having different adhesive strengths from each other are applied to the first adhesive portion 111 and the second adhesive portion 112, a wider range of width ratios may be formed. Furthermore, the distance between the centers of the dots of the first adhesive portion 111 and the distance between the centers of the dots of the second adhesive portion 112 may be different from each other, or the distance between the surfaces of the dots of the first adhesive portion 111 and the distance between the surfaces of the dots of the second adhesive portion 112 may be different from each other. For example, the center-to-center distance of the dots within the first adhesive portion 111 may be designed differently, or the center-to-center distance of the dots within the second adhesive portion 112 may be designed differently. For example, the shape, the material, and the like of the dot or adhesive area may be variously designed and modified as needed or desired to provide the desired adhesive strength for each of the first adhesive portion 111 and the second adhesive portion 112.

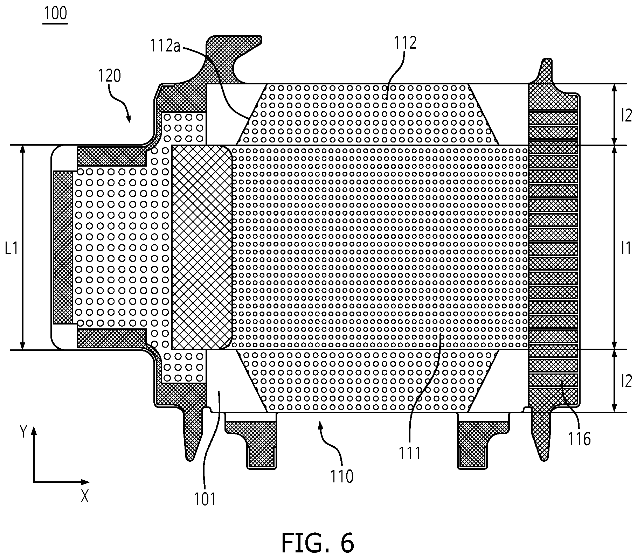

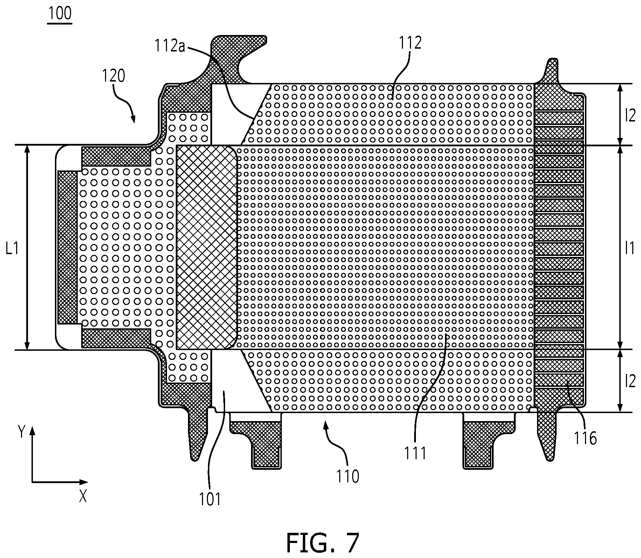

FIG. 6 illustrates a top plan view of a ratio of the gripping portion 120, the first adhesive portion 111, and the second adhesive portion 112 of the battery attachment tape 100 according to some embodiments of the present disclosure. FIG. 7 illustrates a top plan view of a ratio of the gripping portion 120, the first adhesive portion 111, and the second adhesive portion 112 of the battery attachment tape 100 according to some embodiments of the present disclosure.

Referring to FIG. 6 and FIG. 7, in the battery attachment tape 100, the gripping portion 120 and the adhesive portion 110 may have different widths and formation sections from each other in the first and second directions X and Y.

The width of the first adhesive portion 111 in the first direction X may be equal to or greater than that of the gripping portion 120 in the first direction X. In some embodiments, the width l1 of the first adhesive portion 111 in the second direction Y may be equal to or greater than the width L1 of the gripping portion 120 in the second direction Y. By forming the width l1 of the first adhesive portion 111 to be greater than or equal to the width L1 of the gripping portion 120 based on the second direction Y, the battery attachment tape 100 may be more easily peeled off from the battery cell 10 in the first direction X.

In some embodiments, the total area of the second adhesive portion 112 may be formed to be smaller than the total area of the first adhesive portion 111. Referring to FIG. 6, the width l1 of the first adhesive portion 111 in the second direction Y may be formed to be greater than the sum of the widths l2 of the second adhesive portions 112 in the second direction Y. For example, the width l1 of the first adhesive portion 111 may be formed to be greater than the sum of the widths l2 of a pair of second adhesive portions 112 disposed on opposite sides (e.g., both sides in the Y-direction) of the first adhesive portion 111.

In some embodiments, the second adhesive portion 112 may be disposed to be adjacent to the non-adhesive portion 101. One non-adhesive portion 101 may be provided at each of the four corners of the adhesive portion 110 as shown in the example illustrated in FIG. 6, or one non-adhesive portion may be provided at each of two corners of the adhesive portion 110 adjacent to the gripping portion 120 as shown in the example illustrated in FIG. 7. In some embodiments, the location and the number of various non-adhesive portions 101 may be determined as needed or desired, or by a selection of those having ordinary skill in the art.

For example, compared to the example illustrated in FIG. 6, in the example illustrated in FIG. 7, because only the two non-adhesive portions 101 that are adjacent to the gripping portion 120 are provided, the area of the second adhesive portion 112 may be relatively increased. In the case of the second adhesive portion 112 having a stronger adhesive strength than that of the first adhesive portion 111, the second adhesive portion 112 may maintain or substantially maintain the adhesive strength at the edge, so that the battery attachment tape 100 may not be peeled off from the battery cell 10 due to external factors, such as dropping or twisting, that may occur in the electronic device in a case where the user uses the electronic device.

In some embodiments, the non-adhesive portion 101 may include a boundary line (c-cut) 112a that divides the adhesive area and the non-adhesive area at least obliquely from each other. For example, the shape of the non-adhesive portion 101 may be a triangle or a trapezoid as shown in FIGS. 6 and 7. As an example, in a case where the non-adhesive portion 101 has a right-angled triangular shape, the right-angled portion of the non-adhesive area may be disposed to face the corner of the adhesive portion 110. However, the shape of the non-adhesive area may exist in various desired forms including the c-cut 112a.

The c-cut 112a may have a suitable structure capable of corresponding to a twisting that may occur around the X direction or the Y direction while the battery attachment tape 100 is attached to the battery cell 10 through the adhesive portion 110. For example, in a case where the battery cell 10 is affected by twisting, some separation of the adhesive portion 110 may occur, resulting in a noise. For example, noise may be generated in a case where repeated attachment/detachment is performed between the battery attachment tape 100 and the adhesive portion 110 between the battery cell 10. In some embodiments, the noise may be mainly caused by repeated adhesion and separation between the battery cell 10 and the battery attachment tape 100 due to an adhesive force remaining on the adhesive surface of the battery attachment tape 100. In more detail, because the location where such a noise phenomenon is likely to occur may be the corner, the c-cut 112a may be formed in the second adhesive portion 112 to provide the non-adhesive portion 101 in which an adhesive strength is not formed in the adhesive portion 110.

In some embodiments, the area of the non-adhesive portion 101 may be 5% to 20% of the area of the adhesive portion 100. For example, the non-adhesive portion 101 may occupy about 13% of the total area of the adhesive portion 110. However, the present disclosure is not limited thereto, and as long as the adhesive portion 100 may be attached to the battery cell 10, the non-adhesive portion 101 may have various suitable widths.

For example, the non-adhesive portion 101 may be provided to be adjacent to the second adhesive portion 112, which is a portion of the adhesive portion 110. The adhesive strength of the second adhesive portion 112 may be formed to be relatively greater than that of the first adhesive portion 111, so that the first adhesive portion 111 having the relatively lower adhesive strength may be formed on the central region of the adhesive portion 110, and the second adhesive portion 112 having the relatively higher adhesive strength and the non-adhesive portion 101 may be formed on opposite sides (e.g., both sides) of the first adhesive portion 110 (e.g., in the Y direction).

In some embodiments, the second adhesive portion 112 may be formed on a portion of the perimeter of the non-adhesive portion 101. As an example, referring to FIG. 2, the second adhesive portion 112 may be formed in a trapezoidal shape that is longer in the X direction, and the non-adhesive portions 101 may be provided at respective ends thereof. As such, in some embodiments, the second adhesive portions 112 may be provided on opposite sides (e.g., both sides in the Y-direction) of the first adhesive portion 111, respectively, but the second adhesive portions 112 may be applied differently depending on the number of non-adhesive portions 101, as described above.

In some embodiments, the battery attachment tape 100 may include the gripping portion 120 in which a portion of the battery attachment tape 100 extends from one side (e.g., the left side in the figures) of the battery attachment tape 100 toward another side (e.g., the right side in the figures) of the battery attachment tape 100. Referring to FIG. 6 and FIG. 7, the gripping portion 120 may extend from the adhesive portion 110 in the first direction X. At least a portion of the gripping portion 120 may have adhesive properties. In this case, at least a portion of the gripping portion 120 having an adhesive force on the hexahedral battery cell 10 may be attached to at least one surface of the battery of the battery cell 10. The area to be attached may have an adhesive strength that is the same or substantially the same as that of the first adhesive portion 111, and may have an adhesive strength that is at least weaker than that of the second adhesive portion 112.

A strong adhesive portion 116 may be further included on the other side (e.g., an opposite side) opposite to the one side of the adhesive portion 110, and the strong adhesive portion 116 may include a plurality of line-shaped non-adhesive portions. The line-shaped non-adhesive portions may suppress the formation of bubbles in the strong adhesive portion 116. In some embodiments, a strong adhesive area may be formed in at least a portion of the gripping portion 120. By providing strong adhesives (e.g., a strong adhesive area of the gripping portion 120 and a strong adhesive portion 116 having a line-shaped non-adhesive portion) on both sides (e.g., opposite sides) of the adhesive portion 110 as described above, the adhesive force of the battery attachment tape 100 may be more evenly distributed.

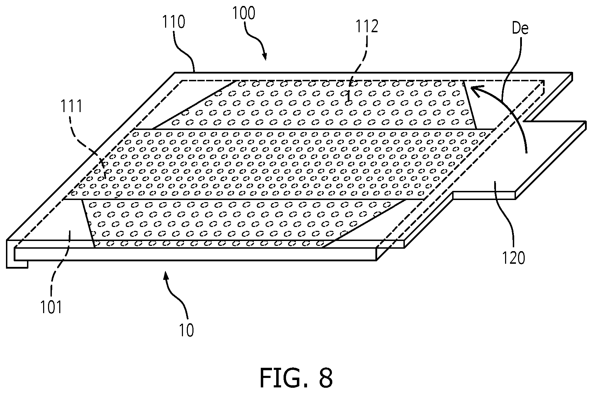

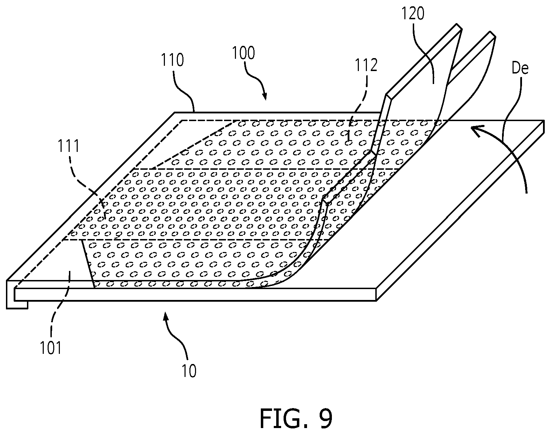

FIG. 8 illustrates a perspective view of a state in which a battery attachment tape 100 is attached to a battery cell 10 according to some embodiments of the present disclosure. FIG. 9 illustrates a perspective view of a state in which a battery attachment tape 100 is being peeled off from a battery cell 10 according to some embodiments of the present disclosure.

Referring to FIG. 8 and FIG. 9, the surface and the area of the adhesive portion 110 of the battery attachment tape 100 may correspond to the surface of the battery cell 10 to which it is attached. The configuration of the gripping portion 120 or the like in the battery attachment tape 100 is provided to extend from the side of the adhesive portion 110, and may be bent in contact with the surface of the battery cell 10. Although the configuration that is bent in contact with the surface of the battery cell 10 is not shown, a configuration that extends in the second direction Y may additionally be included.

The gripping portion 120 illustrated in FIG. 8 is illustrated as being positioned in a state where it is easy for a user to grip and peel it off, and the gripping portion 120 may be pulled in the indicated peeling direction De. As illustrated in FIG. 9, the gripping portion 120 is completely peeled off in the peeling direction De, so that the battery cell 10 and the battery attachment tape may be separated from each other.

Although the present disclosure has been described above with respect to embodiments thereof, the present disclosure is not limited thereto. Various modifications and variations can be made thereto by those skilled in the art within the present disclosure and the equivalent scope of the appended claims.

## Claims

1. A battery attachment tape (100) comprising:
an adhesive portion (110) comprising an adhesive surface attached to a surface of a battery cell (10); and
a gripping portion (120) extending from one side of the adhesive portion (110),
wherein the adhesive portion (110) comprises:
a first adhesive portion (111) overlapping with the gripping portion (120) in a first direction (X); and
a second adhesive portion (112) on opposite sides of the first adhesive portion (111), and
wherein adhesive strengths of the first adhesive portion (111) and the second adhesive portion (112) are different from each other.

2. The battery attachment tape (100) as claimed in claim 1, wherein the first adhesive portion (111) extends to another side opposite to the one side of the adhesive portion (110).

3. The battery attachment tape (100) as claimed in claim 1 or claim 2, wherein the adhesive strength of the second adhesive portion (112) is greater than the adhesive strength of the first adhesive portion (111).

4. The battery attachment tape (100) as claimed in claim 3, wherein each of the first adhesive portion (111) and the second adhesive portion (112) comprises a plurality of dots comprising an adhesive material, and
wherein the dots of the second adhesive portion (112) have a dot diameter larger than those of the dots of the first adhesive portion (111).

5. The battery attachment tape (100) as claimed in claim 4, wherein the dot diameter of a first dot (111-1) from among the dots of the first adhesive portion (111) is 1.2 mm, and the dot diameter of a second dot (112-1) from among the dots of the second adhesive portion (112) is 1.5 mm.

6. The battery attachment tape (100) as claimed in claim 3, wherein each of the first adhesive portion (111) and the second adhesive portion (112) comprises a plurality of dots comprising an adhesive material, and
wherein adjacent dots from among the plurality of dots are located with their centers spaced equally apart from each other.

7. The battery attachment tape (100) as claimed in any one of claims 1 to 6, wherein a width of the first adhesive portion (111) in the first direction (X) is greater than or equal to a width of the gripping portion (120) in the first direction (X).

8. The battery attachment tape (100) as claimed in any one of claims 1 to 7, wherein a total area of the second adhesive portion (112) is smaller than a total area of the first adhesive portion (111).

9. The battery attachment tape (100) as claimed in any one of claims 1 to 8, further comprising a non-adhesive portion (101) having a non-adhesive area on at least one of edges at a border area of the adhesive portion (110).

10. The battery attachment tape (100) as claimed in claim 9, wherein the non-adhesive portion (101) is adjacent to the second adhesive portion (112).

11. The battery attachment tape (100) as claimed in any one of claims 1 to 10, further comprising:
a strong adhesive portion (116) on another side opposite to the one side of the adhesive portion,
wherein the strong adhesive portion (116) comprises a plurality of line-shaped non-adhesive portions.

12. A battery attached with a battery attachment tape (100), wherein the battery attachment tape (100) is a battery attachment tape (100) according to Claim 1.

13. The battery as claimed in claim 12, wherein the first adhesive portion (111) extends to another side opposite to the one side of the adhesive portion (110).

14. The battery as claimed in claim 12 or claim 13, wherein the adhesive strength of the second adhesive portion (112) is greater than the adhesive strength of the first adhesive portion (111).

15. The battery as claimed in claim 14, wherein each of the first adhesive portion (111) and the second adhesive portion (112) comprises a plurality of dots comprising an adhesive material, and
wherein the dots of the second adhesive portion (112) have a dot diameter larger than those of the dots of the first adhesive portion (111).
